Europäisches Patentamt

European Patent Office

Office européen des brevets

(11) Publication number: **0 209 171**
A2

# EUROPEAN PATENT APPLICATION

(21) Application number: **86201047.7**

(22) Date of filing: **17.06.86**

(51) Int. Cl.⁴: **B 64 C 13/00,** B 64 C 17/00,
B 64 C 21/00

(30) Priority: **08.07.85 SE 8503373**

(43) Date of publication of application: **21.01.87**
**Bulletin 87/4**

(84) Designated Contracting States: **CH DE FR GB IT LI**

(71) Applicant: **SAAB-SCANIA AKTIEBOLAG, Fack,
S-581 88 Linköping (SE)**

(72) Inventor: **Sven, Telge, Alghornsvägen 5, Grebo,
S-585 90 Linköping (SE)**

(74) Representative: **Rustner, Lars, SAAB-SCANIA AB Patent
Department, S-581 88 Linköping (SE)**

(54) **A device for yawing moment control for aircraft.**

(57) A device for yawing moment control in aircraft with a
slender nose at high angles of attack in the range of 20°–80°,
most importantly 35°–70°, at speeds especially up to Mach
0.5, for elimination of stochastically arising asymmetrical
body nose air vortices, characterized by ports arranged at
both sides of the nose, which ports are mutually so connected that a pressure difference between the two sides
produced by the symmetrical body nose air vortices is
equalized. The device causes self-stabilizing of an aircraft
at an oblique relative wind angle of up to about 5° and a re-
storing yaw moment within the range of about 5°–12°.

## A Device for Yawing Moment
## Control for Aircraft

The present invention relates to a device for yaw moment control for an aircraft having a slender nose, at high angles of attack and especially at speeds up to Mach 0.5. The nose may be pointed or rounded.

In aircraft such as airplanes and guided missiles, especially those for supersonic speed, with a nose characterized by a high slenderness ratio, that is, length/width over 1.5, there normally arise large uncontrolled yawing moments, even with symmetrical relative wind, at high angles of attack $\alpha$, that is, the angle between the longitudinal axis of symmetry of the aircraft and the existing wind vector, in the region of $20^{\circ}$ - $80^{\circ}$, most notably $35^{\circ}$ - $70^{\circ}$, at speeds up to Mach 0.5. The reason is that there are formed asymmetrical, stochastically arising nose-body vortices, which cause an asymmetric pressure on the nose body that gives rise to a yawing moment. Since the ordinary steering means of an aircraft has a markedly reduced effect in the angle of attack region just mentioned, the condition involves a serious disadvantage. Various means are known for eliminating this disadvantage. Thus it has been proposed that the aircraft's nose be provided with symmetrically arranged guide plates, so-called strakes, with the function of distributing the arising body nose air vortices symmetrically so that the yaw moment is eliminated. Such guide plates cause a significant increase in drag, even at moderate angles of attack at high speeds. Another known means for avoiding the above mentioned disadvantage comprises apparatus for blowing pressure air or powder gas in a direction transverse to the plane of symmetry of the aircraft, whereby the yawing moment is opposed. Such arrangements are heavy and bulky. A related complication is that possible installation of radar apparatus in the front part of the aircraft would interfere with such a device in the nose part.

The object of this invention is to provide a simple, reliable device for yaw moment control in aircraft with slender nose portions at high angles of attack and especially at speeds up to Mach 0.5. The device is such that it does not cause increased drag at high speeds.

Such a device is characterized according to the invention in that ports are arranged in both sides of the nose portion of the aircraft, separated from the plane of symmetry of the aircraft, which ports are mutually so connected that a pressure difference between the two sides caused by one of the mentioned asymmetrical nose body vortices is equalized.

The device can be embodied in various ways. It is suitable to arrange the ports, seen at right angles to the longitudinal axis of symmetry, in the plane of symmetry, pairwise with their centers of gravity essentially on a line at right angles to the axis of symmetry. It is also suitable to arrange the ports, seen in the direction at right angles to the plane of symmetry, pairwise with their centers of gravity at like distances from the longitudinal axis of symmetry, preferably near it or somewhat below it. In a suitable embodiment the centers of gravity of the ports are at a distance from the tip of the nose that corresponds substantially to the distance between ports. The ports should be located in the forward part of the nose portion, the centers of gravity within a distance from the tip of the nose portion equal to 0.02 - 0.2 times the length of the nose portion, suitably about .05 times the same. The ports can have different forms, but are suitably circular with a diameter on the order of .01 times the length of the nose portion. The ports can also have the form of elongated slits, suitably with longitudinal axes substantially parallel with the longitudinal axis of symmetry of the aircraft.

Since one seeks the smallest possible drag at high speeds, the ports ought to be provided with controllable closures which cover the ports in normal flight at high speeds. The closures are so arranged that they can be removed when necessary, suitably inwardly so that they do not create extra air resistance. In a special embodiment the closures can take the form of safety devices arranged to be removed from the aircraft with pressure gas, for example from an initiatable powder charge. In that case the device must then be restored after operating in flight. The invention is more particularly explained with reference to the accompanying drawings, the nature of which appears from the following:

Fig. 1a is a perspective sketch of the nose part of an aircraft with symmetrical flow relationship;

Fig. 1b is a cross-section through the subject matter of Fig. 1a, seen from in front;

Fig. 2a is a view like Fig. 1a but with asymmetrical flow conditions;

Fig. 2b is a view like Fig. 1b, but through the subject matter of Fig. 2a;

Fig. 3 shows the relationship between the yawing moment coefficient $C_n$ and the angle of attack $\alpha$ ;

Fig. 4 shows the relationship between the yawing moment coefficient $C_n$ (at $\alpha = 50^\circ$) and the oblique relative wind angle $\beta$ ;

Fig. 5 is a longitudinal section of a device according to the invention, seen from above;

Figs. 6 and 7 are side views of devices according to the invention;

Fig. 8 shows a nose portion of an aircraft provided with a device according to the invention, seen from the side;

Figs. 9 and 10 show alternative devices according to the invention, seen from the side;

Fig. 11 shows a device according to the invention with controllable closures, in longitudinal section, seen from above;

Fig. 12 is a longitudinal section, seen from above, of a device according to the invention, but with closures arranged to be removed with gas pressure.

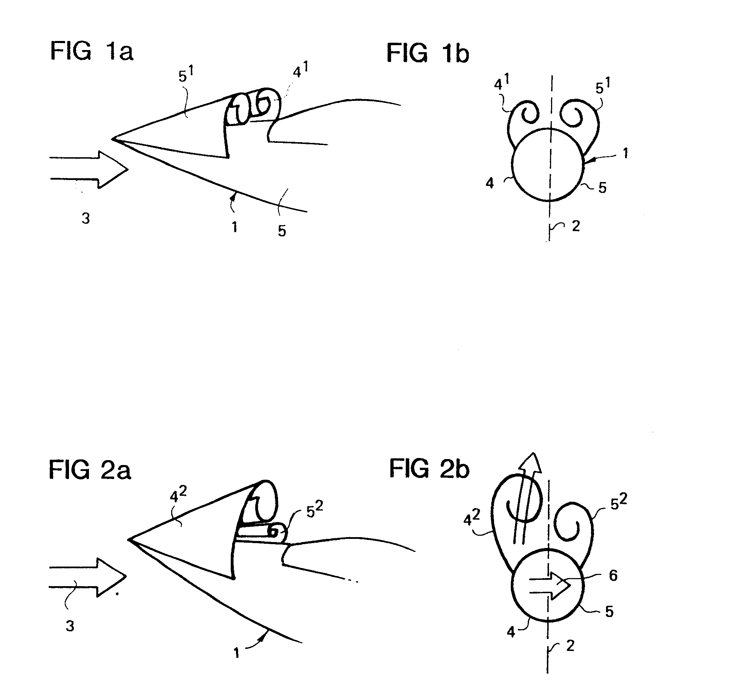

In Figs. 1a and 1b are shown flow conditions at an airplane nose at moderate angles of attack $\alpha$ and an oblique relative wind angle, that is to say the angle between the plane of symmetry of the airplane's nose and the wind vector, $\beta = 0$. An airplane's nose is designated by 1, its plane of symmetry by 2, the prevailing wind vector by 3. Symmetrical flow conditions prevail so that from the sides 4, 5 of the airplane's nose, spaced from the plane of symmetry, departing body air vortices 4, 5 are symmetrical, which means that the pressure conditions caused by them do not produce any yaw moment. If the angle of attack $\alpha$ increases, there gradually arise around the nose of the airplane the asymmetrical flow conditions that are depicted in Fig. 2a and 2b. Since the body air vortices 4, 5 are released asymmetrically from the airplane's nose, there arise through the asymmetrically distributed pressures on the sides 4, 5 a side force 6 which gives rise to a yaw moment.

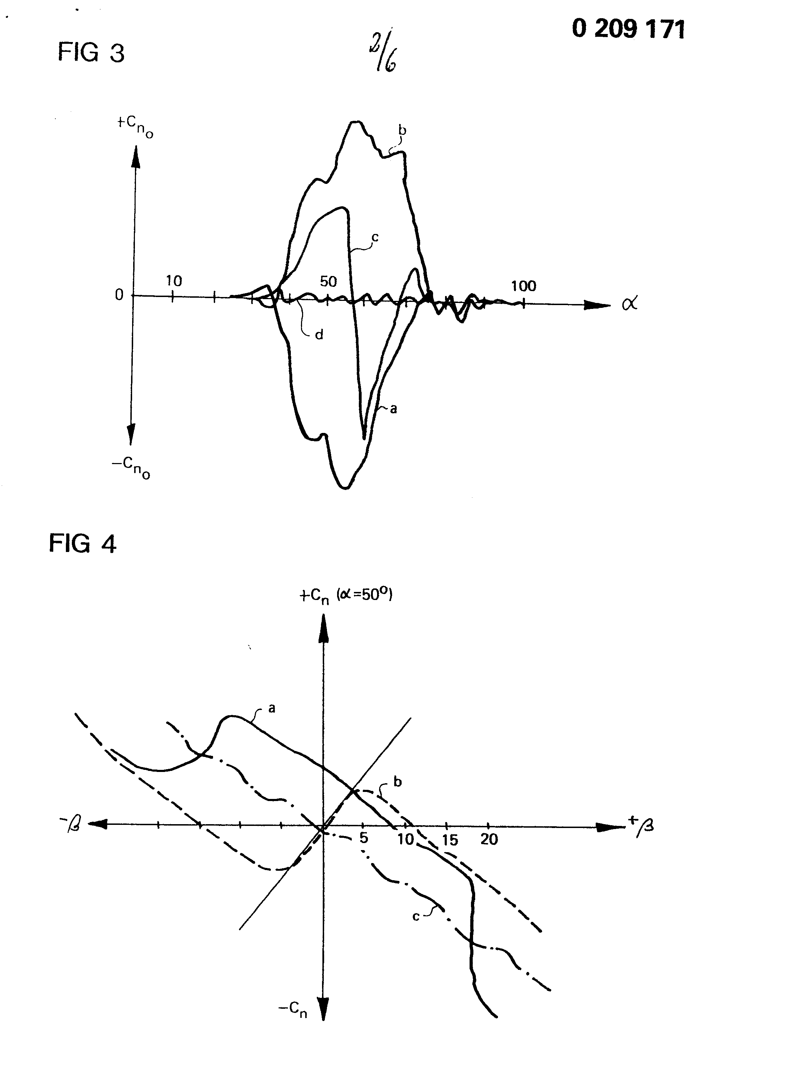

In Fig. 3 is shown the relationship between $C_n$ and $\alpha$, that is, the yaw moment coefficient $C_n$ at $\beta = 0$ and angle of attack. The yaw moment coefficient $C_n$ is a dimensionless number and is defined as "yaw moment/dynamic pressure x wing area x wing span." The depicted curves a, b and c were measured in a wind tunnel on a slender airplane model and are typical for the speed range up to Mach 0.5. In the measurements the flow conditions at the airplane's nose arose stochastically, which means that it is not possible to predict whether left-side symmetry, curve a, right-side symmetry, curve b, or alternating left and right symmetry, curve c, will arise with increasing $\alpha$. From the diagram it appears that the asymmetrical flow conditions begin to arise at $\alpha$ = about $25^o$ and gives rise to a significant yaw moment between $35^o$ and $70^o$. If the airplane's nose is provided with a device according to the invention, the yaw moment caused by the asymmetrical flow condition is eliminated, since the pressure difference between the sides of the airplane's nose, which is the direct cause of the yaw moment, is equalized. This is illustrated in Fig. 3, curve d, which shows a measurement of the same type as relates to curves a - c but with the nose of the airplane provided with a device according to the invention. As can be seen, the yaw moment is, as a practical matter, wholly eliminated.

The device according to the invention thus solves the problem of uncontrolled yaw moments at high angles of attack with a symmetrical relative wind, that is $\beta = 0$. It

has shown itself, however, to have a further valuable function. This relates, in particular, to the self-stabilizing of an aircraft with a certain oblique relative wind, that is, ordinary values of $\beta$. In Fig. 4, $C_n$ at $\alpha = 50°$

is shown as a function of $\beta$. The curves were measured in a wind tunnel by the same method as is seen in Fig. 3.

Curve a shows an uncontrolled yawing moment that arises on an airplane's nose without any device according to the invention. Curve b on the other hand shows the yawing moment that is typical for an airplane's nose provided with a device according to the invention. In the diagram $+C_n$ signi-

fies the yawing moment coefficient for a restoring yaw moment and $-C_n$ for a non-restoring yaw moment. With increasing $\beta$, up to about 5°, $C_n$ increases, which means that the airplane is self-stabilized without use of an active control device such as a rudder. Within the region $\beta = 5° - 12°$ there arises a certain restoring yaw moment, which means that the airplane is trimmable with an active control device. Curve c depicts $C_n$ as a function of $\beta$ at an airplane's nose provided with symmetrically placed lengthwise extending guide plates, so-called strakes. As is apparent from the curve, such guide plates have no stabilizing function whatsoever with an oblique relative wind, but instead they produce instability which is of course a disadvantage, in addition to their already-mentioned characteristic of producing a significant drag at high speeds even at ordinary angles of attack.

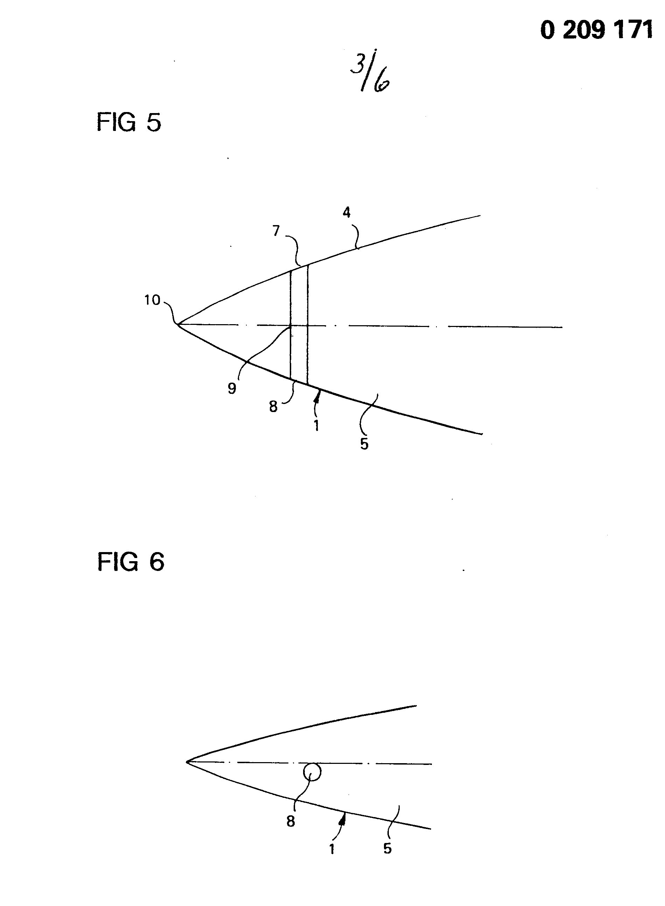

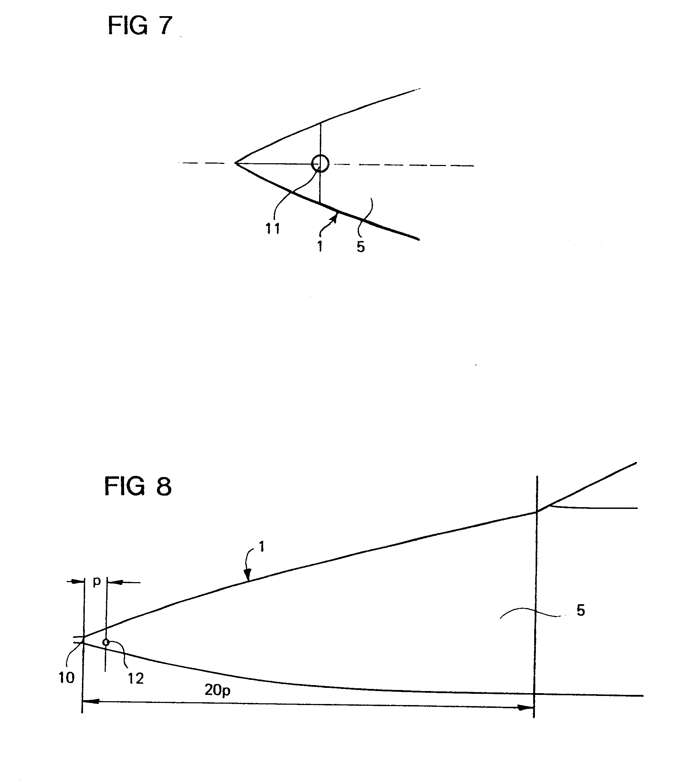

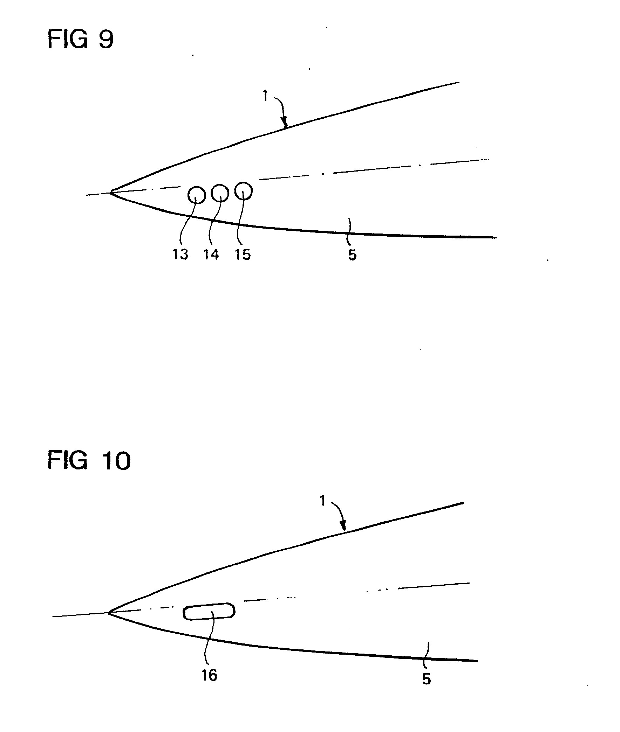

In Figs. 6 - 12 are shown some embodiments of a device according to the invention. In Figs. 6 and 7 is shown a device with a port 7 arranged in the side 4 of the nose portion 1 and a port 8 in the side 5. The ports 7, 8 are provided with a passage 9 which in the illustrated embodiment is arranged at right angles to the longitudinal axis of symmetry of the nose portion. The ports 7, 8 are located with their centers of gravity somewhat below the

mentioned longitudinal symmetry axis. The passage 9 is located at approximately a distance from the tip 1 of the nose portion that corresponds to the length of the passage 9 between the ports 7, 8. In Fig. 7 is shown a device according to the invention, having ports, of which only the one 11 is seen, that are located at the half-height, that is, they have their centers of gravity in a plane through the longitudinal axis of symmetry at right angles to the plane of symmetry. In Fig. 8 is shown a suitable device according to the invention, with ports, of which only one 12 is visible, placed at a distance from the tip 10 of the nose portion 1 equal to 1/20 of the length of the nose portion 1. An embodiment with three ports 13, 14, 15 at one side and corresponding symmetrically placed ports is shown in Fig. 9, and Fig. 10 shows a port 16 in the form of an oval slit, extending in the direction of the longitudinal symmetry axis.

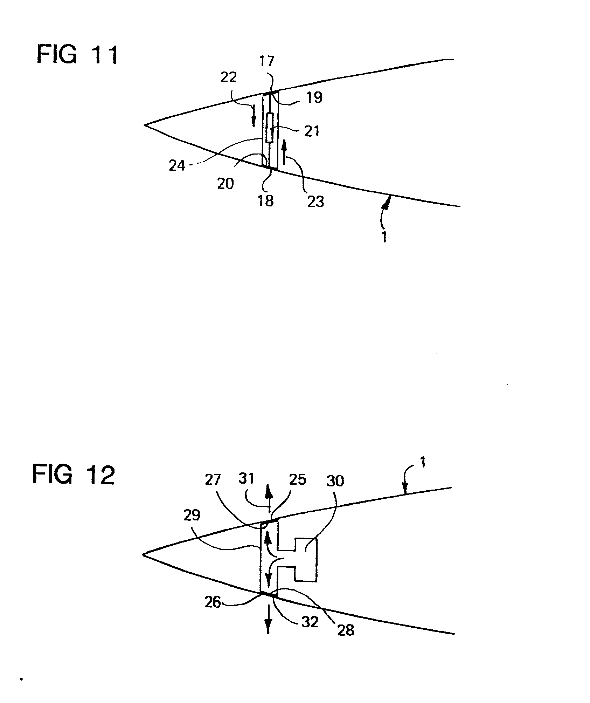

An embodiment with ports 17, 18 provided with controllable closures 19, 20 is shown in Fig. 11. A linear motor 21 is arranged to draw the closures 19, 20 inward, when necessary, in the direction of arrows 22, 23, so that a connection is provided between the ports 17, 18 through a passage 24. When the need for yaw moment control no longer exists, the ports 17, 18 can be closed by reason of the linear motor 21 being caused to move the closures 19, 20 back to the closed position, oppositely to the direction of the arrows 22, 23, whereby the drag increasing effect of the ports 17, 18, especially at high speeds, is eliminated.

An embodiment that has the character of safety equipment is shown in Fig. 12. Ports 25, 26 are here closed by closures 27, 28 in the ends of a passage 29 that connects ports 25, 26. The passage 29 is also connected with a pressure source 30 in which is located, for example, an initiatable powder charge. When need arises, it is caused to explode, and the pressure thus formed drives out the closures 27, 28 in the direction of the arrows 31, 32, so that a pressure equalizing connection is thus created between the two sides of the nose portion, so that a possible uncontrolled yaw moment is eliminated.

Claims

1. Device for an aircraft, especially one for supersonic speeds, comprising a central elongated body with a nose, wherein the relationship between the length of the nose and its width is greater than 1.5 and the aircraft is substantially symmetrical about a symmetry plane, for yaw moment control, that is, elimination of possible yaw moments about an axis at right angles to the longitudinal axis of symmetry of the body in said plane of symmetry, which yaw moment is caused by stochastically arising asymmetrical body nose vortices at high angles of attack $\alpha$, that is, the angle between the longitudinal symmetry axis of the body and the existing wind vector, at speeds especially up to Mach 0.5, characterized in that ports are arranged in the nose portion of the body, at both sides, spaced from the plane of symmetry, which ports are so mutually connected that a pressure difference between the two sides, due to the asymmetrical body nose air vortices, is equalized.

2. Device according to claim 1 characterized in that the ports, seen in a direction at right angles to the plane of symmetry, in the plane of symmetry, are arranged pair-wise with their centers of gravity substantially on a line at right angles to the axis of longitudinal symmetry.

3. Device according to claim 1 or 2, characterized in that the ports, seen in a direction at right angles to the plane of symmetry, are arranged pair-wise with their centers of gravity at different distances from the longitudinal symmetry axis, preferably near it.

4. Device according to claim 2 or 3, characterized in that said line at right angles to the longitudinal plane of symmetry is located at a distance from the tip of the nose that substantially corresponds to the distance between a pair of ports.

5. Device according to claim 2 or 3 characterized in that said line at right angles to the longitudinal axis of symmetry is located at a distance from the tip of the nose corresponding to 0.02 - 0.2 of the length of the nose.

6. Device according to any of claims 1 to 5 characterized in that the ports are circular.

7. Device according to claim 6, characterized in that the diameter of the ports is about 0.01 times the length of the nose.

8. Device according to any of claims 1 to 5, characterized in that the ports have the form of oval slots.

9.  Device according to claim 8, characterized in that the longitudinal axis of the slots is substantially parallel with said longitudinal axis of symmetry.

10.  Device according to any of claims 1 to 9 characterized in that the ports are provided with controllable closures.

11.  Device according to claim 10, characterized in that the closures are arranged removably by means of gas pressure, preferably produced by explostion of a powder charge.

FIG 1a

FIG 1b

FIG 2a

FIG 2b

FIG 3

2/6

0 209 171

FIG 4

FIG 5

FIG 6

4/6

FIG 7

FIG 8

FIG 9

FIG 10

FIG 11

FIG 12